# FASCICULE DE BREVET EUROPEEN

(11) **EP 0 675 158 B1**
(45) Date de publication et mention de la délivrance du brevet: **25.10.2000**
(21) Numéro de dépôt: 95420066.3
(22) Date de dépôt: 16.03.1995
(51) Int. Cl.: C08J 7/04, C09D 129/04

(54) **Films polyesters composites à propriétés barrière**
Polyesterverbundfolien mit Barriereeigenschaften
Composite polyester films with barrier properties

(30) Priorité: 31.03.1994 FR 9404267
(43) Date de publication de la demande: 04.10.1995
(73) Titulaire: TORAY PLASTICS EUROPE SA, 01701 Saint-Maurice de-Beynost (FR)
(72) Inventeur: Prissette, Michel, F-69500 Bron (FR); Veyrat, Didier, F-69450 Saint-Cyr-Au-Mont-D'Or (FR)
(74) Mandataire: Kügele, Bernhard

(56) Documents cités:
- EP-A- 0 135 451
- EP-A- 0 410 903
- FR-A- 2 273 642
- DATABASE WPI Week 9410 Derwent Publications Ltd., London, GB; AN 94-080075 & JP-A-06 032 924 (UNITIKA LTD) , 8 Février 1994
- DATABASE WPI Week 8939 Derwent Publications Ltd., London, GB; AN 89-283002 & JP-A-01 208 132 (TORAY IND INC)
- DATABASE WPI Week 8712 Derwent Publications Ltd., London, GB; AN 87-082327 & JP-A-62 032 048 (TEIJIN KK)

## Description

La présente invention concerne des films composites à base de polyester ayant de bonnes propriétés barrière vis-à-vis des gaz.

Les films en polyester, notamment en polytéréphtalate d'éthylène, sont largement utilisés dans le domaine de l'emballage, en raison de leurs nombreux avantages tels que leurs propriétés mécaniques, leur transparence, leur absence de toxicité, leur absence d'odeur ou de goût.

Cependant, leurs propriétés de barrière aux gaz peuvent limiter leur utilisation dans les applications nécessitant une protection importante des produits emballés contre l'action des gaz extérieurs, en particulier contre l'action de l'oxygène de l'air, ou à l'inverse ne pas permettre de maintenir constante la composition en gaz à l'intérieur des emballages.

Afin de pallier cet inconvénient, il a été proposé dans le brevet GB-A-1 126 952 de déposer sur un film polymérique une solution d'alcool polyvinylique, afin de créer une couche d'-alcool polyvinylique, ce dernier composé ayant de bonnes propriétés barrière aux gaz. Afin de permettre une bonne adhésion de la couche d'alcool polyvinylique sur les films en acétate de cellulose, en polycarbonate ou en polytéréphtalate d'éthylène, une couche intermédiaire d'un adhésif en polyuréthanne est disposée entre le film de base et la couche d'alcool polyvinylique.

Le brevet EP-A-0 254 468 décrit également un film composite comportant un film de base en polymère thermoplastique synthétique, tel que polyamide, polyéthylène, polypropylène ou polyester, ayant 2 revêtements sur une même face du film de base ; le premier revêtement est adjacent au film de base et est constitué d'un primaire uréthanne dans un solvant, qui permet à l'état sec à une dispersion en solution aqueuse d'alcool polyvinylique de mouiller le primaire, le deuxième revêtement est placé sur la surface séchée et libre du premier revêtement et comprend un matériau à base d'alcool polyvinylique servant de barrière aux gaz.

Dans les films composites de l'art antérieur, le revêtement en alcool polyvinylique est généralement séparé du film de base par une couche adhésive en polyuréthanne. En outre la couche d'alcool polyvinylique est généralement épaisse (par exemple de 0,15 à 2 micromètres dans les revendications du brevet précité EP-A-0 254 468), ce qui complique la recyclabilité des films composites.

Le brevet JP-A-06-032924 décrit des films étirés biaxialement à base de polypropylène ou de polyester sur une face desquels est formée une couche de 1,7 à 4 micromètres d'alcool polyvinylique ayant un degré de polymérisation de 300 à 1000 et un taux de saponification de 95 % à 99,5 %. Comme pour le document cité précédemment, les épaisseurs relativement importantes de la couche d'alcool polyvinylique compliquent la recyclabilité des films composites.

La présente invention est constituée par des films en polyester à bonnes propriétés barrière vis-à-vis des gaz grâce à un revêtement en alcool polyvinylique, disposé directement sur la surface du film polyester sans présence d'une couche intermédiaire adhésive.

Plus précisément, elle concerne un film composite étiré biaxialement, à base de polyester et ayant des propriétés.barrière vis-à-vis des gaz améliorées, caractérisé en ce qu'il comporte un film de base en polyester ayant de 5 µm à 50 µm, revêtu sur au moins l'une de ses deux faces par une couche d'alcool polyvinylique, ayant un degré de polymérisation moyen en nombre égal ou supérieur à 350, d'épaisseur inférieure ou égale à 0,3 µm, la rugosité moyenne Rz du film de base étant inférieure ou égale à 0,30 µm sur la ou les faces du film comportant la couche d'alcool polyvinylique et cette ou ces dite(s) face(s) ne comportant en moyenne pas plus de 20 pics ayant une hauteur égale ou supérieure à 1 micromètre et pas plus de 150 pics ayant une hauteur comprise entre 0,4 et 1 micromètre, par millimètre carré, et ledit film composite présentant une perméabilité à l'oxygène mesurée à 23°C sous 50 % d'humidité relative, inférieure ou égale à 3 cm³/m²/24 h.

La distribution de hauteurs de pics, mentionnée précédemment pour définir la topographie de surface du film de base en polyester, peut notamment être déterminée, de manière connue, par l'observation au microscope interférométrique, permettant de compter le nombre d'anneaux d'interférence pour une lumière de longueur d'onde connue. Les interféromètres les plus fréquemment utilisés sont les interféromètres de NOMARSKI ou de MIRAU ou de MICHELSON.

Le polyester constituant le film de base peut être choisi parmi les polyesters auxquels on fait appel habituellement pour l'obtention de films semi-cristallins bi-orientés. Il s'agit de polyesters linéaires filmogènes, cristallisables par orientation et obtenus de façon usuelle à partir d'un ou plusieurs acides aromatiques dicarboxyliques ou leurs dérivés (esters d'alcools aliphatiques inférieurs ou halogénures par exemple) et d'un ou plusieurs glycols aliphatiques. Comme exemple d'acides aromatiques, on peut citer les acides phtalique, téréphtalique, isophtalique, naphtalènedicarboxylique-2,5 ; naphtalène-dicarboxylique-2,6. Ces acides peuvent être. associés à une quantité mineure d'un ou plusieurs acides dicarboxliques aliphatiques ou cycloaliphatiques, tels que les acides adipique, azélaïque, hexahydrotéréphtalique. Comme exemples non limitatifs de diols aliphatiques, on peut citer l'éthylèneglycol ; le propanediol-1,3 ; le butanediol-1,4. Ces diols peuvent être associés à une quantité mineure d'un ou plusieurs diols aliphatiques plus condensés en carbone (néopentylglycol par exemple) ou cycloaliphatiques (cyclohexanediméthanol). Préférentiellement, les polyesters filmogènes cristallisables sont des polytéréphtalates ou des polynaphtalènedicarboxylates d'alkylènediol et, en particulier, le polytéréphtalate d'éthylèneglycol (PET) ou de butanediol-1,4 ou des copolyesters comportant au moins 80 % en moles de motifs téréphtalate d'éthylèneglycol. Avantageusement, le polyester est un polytéréphtalate d'éthylèneglycol dont la viscosité intrinsèque mesurée à 25°C dans l'ortho-chlorophénol est comprise entre 0,6 et 0,75 dl/g.

Le polyester constituant le film de base doit être choisi de telle façon que sa température de début de fusion soit supérieure à la température, à laquelle le film biétiré comportant la couche d'alcool polyvinylique est chauffé lors de sa préparation.

La rugosité moyenne Rz du film de base (telle que définie dans la norme DIN 4768) est inférieure ou égale à 0,30 µm et de préférence inférieure à 0,25 µm, sur la face du film comportant la couche d'alcool polyvinylique.

Il est préférable que cette dite face ne comporte en moyenne pas plus de 800 pics ayant une hauteur inférieure à 0,4 micromètre, par millimètre carré.

Pour des mises en oeuvre industrielles des procédés de préparation des films de l'invention, dans lesquelles la vitesse machine à laquelle est soumis le film est généralement supérieure à 100 mètres par minute, il est plus particulièrement préféré que la face du film de base comportant la couche d'alcool polyvinylique ne comporte en moyenne pas plus de 20 pics ayant une hauteur égale ou supérieure à 1 micromètre et pas plus de 100 pics ayant une hauteur comprise entre 0,4 et 1 micromètre, par millimètre carré. Enfin, il est encore plus préférable, dans ce contexte industriel, qu'en outre la face du film de base comportant la couche d'alcool polyvinylique ne comporte en moyenne pas plus de 500 pics ayant une hauteur inférieure à 0,4 micromètre, par millimètre carré. Mais il est bien entendu qu'en opérant à des vitesses plus faibles, notamment pour des essais en installation pilote ou laboratoire, cette limitation préférentielle n'est pas nécessaire.

L'autre face, dite face dorsale, doit présenter des propriétés de glissant suffisantes pour permettre une manipulation facile du film, notamment son enroulement sur les différents rouleaux-guides lors des étirages ou son enroulement sur lui-même.

Cette rugosité peut être apportée de différentes manières. Une des façons les plus courantes de procéder consiste à incorporer dans le polyester, avant la transformation en film, des charges solides inertes. Ces charges sont généralement des charges minérales, telles que par exemple la silice, le dioxyde de titane, le dioxyde de zirconium, l'alumine, les mélanges silice/alumine, les silicates, le carbonate de calcium, le sulfate de baryum. Ces charges peuvent également être constituées de particules de polymères.

Le diamètre médian en volume des charges est en général compris entre 1 et 10 micromètres et de préférence entre 1 et 5 micromètres.

La teneur en charge du film est habituellement comprises entre 0,02 % et 1 % en poids par rapport au poids du polyester.

Une variante intéressante de l'invention consiste à avoir sur les 2 faces du film polyester de base des rugosités moyennes Rz différentes, par exemple égale ou supérieure à 0,15 micromètre sur la face dorsale du film, et inférieure ou égale à 0,30 micromètre, et de préférence inférieure ou égale à 0,25 micromètre, sur la face du film de base comportant le revêtement en alcool polyvinylique, ladite la face du film de base ayant le revêtement en alcool polyvinylique ne comportant de préférence en moyenne pas plus de 20 pics ayant une hauteur égale ou supérieure à 1 micromètre et pas plus de 100 pics ayant une hauteur comprise entre 0,4 et 1 micromètre, par millimètre carré et encore plus préférentiellement pas plus de 500 pics ayant une hauteur inférieure à 0,4 micromètre, par millimètre carré.

Ainsi le film de base en polyester peut être constitué de deux couches présentant des propriétés de surface, notamment des rugosités, différentes.

L'obtention de tels films dissymétriques peut se faire selon la technique de la coextrusion de 2 polyesters comportant des taux de charges différents et le cas échéant des charges différentes. Commodément le polyester utilisé est le même pour les 2 couches coextrudées et la couche devant recevoir la couche d'alcool polyvinylique n'est pas chargée. Les épaisseurs relatives des 2 couches de polyester constituant le film polyester de base peuvent varier largement.

Généralement, la couche non chargée (ou plus faiblement chargée) recevant l'alcool polyvinylique a une épaisseur supérieure ou égale à 0,5 µm, de préférence supérieure ou égale à 1,0 µm.

Dans le cadre de l'invention, il n'est pas exclu d'obtenir un film de base en polyester, présentant des propriétés de surface différentes sur les deux faces, par d'autre moyens connus de l'art antérieur.

Ainsi on peut conférer, selon le brevet EP-A-0 378 954, à la face dorsale du film de base un bon glissant, en déposant sur ladite face dorsale un polymère modifié, obtenu par polymérisation radicalaire en phase aqueuse, d'au moins un monomère acrylique et d'un polyester dissipable dans l'eau, dérivé d'au moins un acide aromatique dicarboxylique et d'au moins un diol aliphatique et comportant une pluralité de groupes sulfonyloxy, notamment sulfonate de sodium.

Comme indiqué précédemment la couche d'alcool polyvinylique a une épaisseur égale ou inférieure à 0,3 µm. Cette épaisseur peut si on le souhaite être inférieure ou égale à 0,20 µm, voire même à 0,10 µm, afin d'améliorer encore la recyclabilité du film selon l'invention. En pratique, on descend rarement à des épaisseurs inférieures à 0,05 µm.

L'invention concerne également des films composites tels que ceux décrits précédemment, qui comportent en outre sur l'une de leurs faces une couche d'impression ou un primaire d'impression ou encore, sur la face libre de la couche d'alcool polyvinylique, une couche thermoscellable.

La couche d'impression peut être déposée par les méthodes d'impression connues, telles que par exemple l'héliogravure, la flexographie, la sérigraphie. De préférence, on utilisera des encres en solution ou dispersion non-aqueuse.

La couche thermoscellable est de préférence de type polyoléfine (polyéthylènes, polypropylènes, éthylène-vinyl acétate notamment). Ces films complexes peuvent être obtenus par contre-collage à l'aide d'adhésif mono- ou bi-composant, ou par extrusion-couchage. Dans ce dernier cas, la face libre de la couche d'alcool polyvinylique est préalablement revêtue de manière connue d'un primaire d'accrochage.

Les films complexes ainsi réalisés peuvent servir à la confection d'emballages, tels que sachets, opercules de barquettes, sur-emballages, etc...destinés à contenir des produits sensibles à l'oxydation. Ils sont tout particulièrement adaptés au conditionnement sous atmosphère modifiée.

Comme indiqué précédemment, un des avantages de ce type de film est de pouvoir être facilement recyclé, grâce à la faible épaisseur de la couche d'alcool polyvinylique.

La présente invention concerne également un procédé de préparation de films décrits précédemment.

Plus précisément, elle consiste en un procédé de préparation de films composites à base d'un film de polyester qui comporte sur au moins une de ses faces une couche d'alcool polyvinylique d'épaisseur inférieure ou égale à 0,3 micromètre, ledit procédé étant caractérisé en ce que l'on enduit le film de base en polyester, sur au moins une des ses faces présentant une rugosité moyenne Rz inférieure ou égale à 0,30 µm et ne comportant en moyenne pas plus de 20 pics ayant une hauteur égale ou supérieure à 1 micromètre et pas plus de 150 pics ayant une hauteur comprise entre 0,4 et 1 micromètre, par millimètre carré, à l'aide d'une solution aqueuse d'alcool polyvinylique présentant au moins 95 % de motifs alcool vinylique, ledit alcool polyvinylique présentant en solution aqueuse à 4 % et à 20°C une viscosité égale ou supérieure à 4 mPa.s, et en ce que l'on traite thermiquement ledit film enduit à une température égale ou supérieure à 170°C.

Il est préférable que la face d'un film en polyester sur laquelle est réalisée l'enduction d'alcool polyvinylique ne comporte en outre en moyenne pas plus de 800 pics ayant une hauteur inférieure à 0,4 micromètre, par millimètre carré.

Comme indiqué précédemment, dans le cadre d'une mise en oeuvre industrielle à grande vitesse machine (généralement plus de 100 mètres par minute) du procédé selon l'invention, il est avantageux que l'enduction par la solution aqueuse d'alcool polyvinylique soit réalisée sur au moins une face d'un film en polyester ne comportant en moyenne pas plus de 20 pics ayant une hauteur égale ou supérieure à 1 micromètre et pas plus de 100 pics ayant une hauteur comprise entre 0,4 et 1 micromètre, par millimètre carré.

Enfin, toujours dans la perspective d'une mise en oeuvre industrielle, on préfère encore plus particulièrement que l'enduction par la solution aqueuse d'alcool polyvinylique soit réalisée sur au moins une face d'un film en polyester ne comportant en outre en moyenne pas plus de 500 pics ayant une hauteur inférieure à 0,4 micromètre, par millimètre carré.

L'enduction du film de base en polyester par une solution d'alcool polyvinylique peut être réalisée en ligne ou en reprise. On opère de préférence par enduction en ligne.

Encore plus préférentiellement, l'enduction sera réalisée en ligne sur un film de base en polyester étiré monoaxialement, qui sera étiré à nouveau après enduction au moins dans la direction opposée à celle du 1er étirage.

Avant l'enduction du film de base, la surface de celui-ci subit généralement un traitement physique (tel que corona, flamme, plasma par exemple) destiné assurer un bon étalement de la couche d'alcool polyvinylique sur ledit film de base. Ce traitement permet d'amener la tension superficielle du film étiré monoaxialement à une valeur supérieure à celle de l'enduction d'alcool polyvinylique et de préférence à une valeur égale ou supérieure à 54 mN.m.

La solution aqueuse d'alcool polyvinylique mise en oeuvre a généralement une concentration de 1 % à 20 % en poids par poids et de préférence de 5 % à 15 % en poids par poids. La solution est préparée soigneusement, d'abord à froid sous agitation simple, puis en chauffant à une température n'excédant pas 95°C ; après refroidissement, elle est filtrée. Cette solution doit être exempte de gels. L'absence de gels peut être contrôlée grâce à des mesures de turbidité, d'extrait sec et d'indice de réfraction.

L'alcool polyvinylique utilisé dans le procédé de l'invention est un composé disponible dans le commerce. Il peut être utilisé tel quel ou il peut être préparé notamment par hydrolyse de carboxylates de vinyle, plus particulièrement les polyacétates de vinyle ou leurs copolymères riches en motifs acétate de vinyle, tels que les copolymères acétate de vinyle/éthylène (ou EVA). Comme précisé précédemment, l'alcool polyvinylique utilisé comporte au moins 95 % de motifs alcool vinylique (taux d'hydrolyse d'au moins 95 %). De préférence il en comporte au moins 97 % et encore plus préférentiellement au moins 98 %.

L'alcool polyvinylique constituant le revêtement du film composite de l'invention présente de préférence une viscosité en solution aqueuse à 4 % et à 20°C, mesurée dans un appareil de type Brookfield, égale ou supérieure à 4 centipoises (ou 4 mPa.s), ce qui correspond, avec les incertitudes liées aux mesures, à un degré de polymérisation moyen en nombre égal ou supérieur à 350.

Le choix de la concentration de la solution d'alcool polyvinylique, ainsi que de l'appareillage servant pour l'enduction, est notamment conditionné par l'épaisseur souhaitée de la couche finale d'alcool polyvinylique.

Sans que le procédé de l'invention puisse se limiter à ce mode de mise en oeuvre, l'enduction en ligne est couramment réalisée à l'aide de rouleaux héliogravés selon la technique dite "reverse gravure".

Bien que ce ne soit pas non plus limitatif, le film de base en polyester est le plus souvent étiré longitudinalement (c'est-à-dire dans le sens de la machine) avant l'enduction en ligne à l'aide de la solution aqueuse d'alcool polyvinylique.

Cet étirage peut être effectué en une ou plusieurs étapes, de même que l'étirage suivant l'enduction en ligne.

La température, à laquelle le film enduit est traité, se situe de préférence entre 180°C et 240°C et encore plus préférentiellement entre 200°C et 230°C.

Le film de base en polyester peut être préparé par extrusion d'un polyester tel que défini précédemment, comportant une ou plusieurs charges inertes pour lui conférer en particulier un glissant suffisant. Il peut également être préparé par coextrusion d'une part d'un polyester non chargé ou plus faiblement chargé et d'autre part d'un polyester chargé.

Dans cette deuxième variante, le film de base en polyester comporte une couche chargée rugueuse constituant la face dite dorsale et une couche non chargée, ou plus faiblement chargée, constituant la face dite ventrale qui recevra l'enduction de la solution d'alcool polyvinylique.

La couche de polyester chargé présente généralement une rugosité moyenne Rz supérieure ou égale à 0,15 micromètre et de préférence supérieure ou égale à 0,30 micromètre, tandis que la couche ventrale non chargée ou plus faiblement chargée présente une rugosité totale inférieure ou égale à 0,30 micromètre et de préférence inférieure ou égale à 0,25 micromètre ; comme indiqué précédemment, la face du film de base, sur laquelle sera réalisée l'enduction à l'aide de la solution d'alcool polyvinylique, ne comporte en moyenne pas plus de 20 pics ayant une hauteur égale ou supérieure à 1 micromètre et pas plus de 100 pics ayant une hauteur comprise entre 0,4 et 1 micromètre, par millimètre carré et encore préférentiellement pas plus de 500 pics ayant une hauteur inférieure à 0,4 micromètre, par millimètre carré.

Les films composites de l'invention présentent une excellente résistance aux agressions mécaniques, telles que notamment le froissage. Cela signifie que leurs propriétés barrière déjà évoquées ne sont pas ou sont peu diminuées après une telle agression mécanique.

Les exemples qui suivent illustrent l'invention.

### EXEMPLES

### MODE OPERATOIRE GENERAL

On prépare un film composite en polytéréphtalate d'éthylène (PET) par coextrusion d'une part d'un PET comportant 0,0800 % de silice obtenue par précipitation de gels et présentant un diamètre moyen de 3,3 micromètres (mesure sur un granulomètre laser de marque SYMPATEC et de type Hélos) qui constitue le film de base et d'autre part d'un PET non chargé dont la face extérieure recevra l'enduction en alcool polyvinylique (APV).

Le film polyester a une épaisseur de 12 micromètres dans les différents exemples ou essais comparatifs, sauf mention contraire, et une rugosité moyenne Rz sur la face dorsale de 0,45 micromètre. Il comprend une couche non chargée (recevant l'enduction d'APV) qui a une épaisseur de 0,5 à 2,0 micromètres selon les exemples, afin de faire varier la distribution de hauteurs de pics par millimètre carré de la surface destinée à recevoir l'enduction APV.

Le film coextrudé est d'abord étiré longitudinalement avec un taux d'étirage de 3,4 ; ensuite il subit un traitement corona qui amène sa tension superficielle à 58 mN.m.

La face du film comportant la couche non chargée est alors enduite à l'aide d'un système d'enduction héliographique avec un rouleau gravé. La vitesse machine lors de l'enduction est de 200 m/min. L'enduction est effectuée à partir d'une solution aqueuse d'APV à 10 % de concentration, soigneusement préparée et exempte de gels. Sauf mention contraire, l'APV utilisé présente 98-99 % de motifs alcool vinylique et une viscosité de 5,5 mPa.s (mesurée à 20°C sur une solution aqueuse à 4 % à l'aide d'un viscosimètre de marque Brookfield LV).

Le film enduit subit alors un étirage transversal avec un taux de 4, puis il est traité thermiquement à une température de 230°C (sauf mention contraire). L'épaisseur de la couche d'APV du film biétiré est de 0,10 micromètre (sauf mention contraire).

### Exemples 1 à 3 et essais comparatifs a, b et c.

Ces différents essais sont réalisés avec des films composites dont la face devant recevoir l'enduction APV présente des distributions de hauteurs de pics différentes. L'essai a est réalisé sans enduction APV. Pour chacun des films, la perméabilité à l'oxygène a été mesurée à 23°C, à 50 % d'humidité relative : elle est exprimée en cm³/m²/24h (mesures réalisées sur un appareil de marque OXTRAN, type 300H, de la société MODERN CONTROL INC.).

Le tableau 1 ci-après indique les distributions de hauteurs de pics par millimètre carré et la rugosité moyenne de la face du film recevant l'enduction APV, ainsi que les valeurs de perméabilité à l'oxygène.

**Tableau 1**

| Essais | Rz | Nombre de pics de hauteur | | | Perméabilité à l'oxygène |
|---|---|---|---|---|---|
| | | > 1µm | entre 0,4 et 1µm | < 0,4 µm | |
| Exemple 1 | 0,2 | 4 | 12 | 170 | 1 |
| Exemple 2 | 0,3 | 13 | 65 | 160 | 2 |
| Exemple 3 | 0,3 | 13 | 60 | 324 | 2 |
| Essai a | 0,2 | 4 | 12 | 170 | 110 |
| Essai b | 0,45 | 29 | 110 | 1000 | 5 |
| Essai c | 0,5 | 32 | 325 | 1630 | 10 |

### Exemple 4 et essai comparatif d

L'exemple 1 est répété, mais le traitement thermique du film en PET est effectuée à une température différente.

Le tableau 2 ci-après indique les perméabilités à l'oxygène mesurées, selon la température de traitement adoptée (l'exemple 1 est rappelé à titre de comparaison).

**Tableau 2**

| Essais | Température de traitement | Perméabilité à l'oxygène |
|---|---|---|
| Exemple 4 | 180°C | 1,3 |
| Exemple 1 | 230°C | 1 |
| Essai d | 150°C | 5 |

### Essais comparatifs e et f

Ces essais ont été effectués avec le même film que dans l'exemple 1, mais en utilisant pour l'enduction un alcool polyvinylique ayant un pourcentage de motifs alcool vinylique (ou taux d'hydrolyse) inférieur à 95 %. La perméabilité obtenue avec les films ainsi préparés est indiquée dans le tableau 3 ci-après (l'exemple 1 est rappelé à titre de comparaison).

**Tableau 3**

| Essais | Taux d'hydrolyse de l'APV | Perméabilité à l'oxygène |
|---|---|---|
| Essai e | 86,5-89,5 | 32 |
| Essai f | 78-81 | 85 |
| Exemple 1 | 98-99 | 1 |

### Exemple 5 et essai comparatif g

Ces essais ont été effectués avec le même film que dans l'exemple 1, mais en utilisant pour l'enduction un alcool polyvinylique ayant une viscosité (mesurée à 20°C sur une solution aqueuse à 4 % à l'aide d'un viscosimètre de marque Brookfield LV) différente de 5,5 mPa.s (le degré de polymérisation moyen en nombre DPn correspondant, donné par le producteur de l'APV est également rappelé). La perméabilité obtenue avec les films ainsi préparés est indiquée dans le tableau 4 ci-après (l'exemple 1 est rappelé à titre de comparaison).

**Tableau 4**

| Essais | Viscosité en mPa.s | DPn | Perméabilité à l'oxygène |
|---|---|---|---|
| Exemple 5 | 4,5 | 400 | 2 |
| Essai g | 3,5 | 300 | 8 |
| Exemple 1 | 5,5 | 500 | 1 |

### Exemple 6

On répète l'exemple 1, avec le même mode opératoire, le film ayant une épaisseur totale de 40 µm et la couche non chargée recevant l'enduction d'alcool polyvinylique ayant une épaisseur de 2 µm.

La perméabilité à l'oxygène du film enduit d'une couche de 0,1 µm est de 1,5 cm³/m²/24h.

## Revendications

1. Film composite étiré biaxialement, à base de polyester et ayant des propriétés barrière vis-à-vis des gaz améliorées, caractérisé en ce qu'il comporte un film de base en polyester ayant de 5 µm à 50 µm d'épaisseur, revêtu sur au moins l'une de ses deux faces par une couche d'alcool polyvinylique, ayant un degré de polymérisation moyen en nombre égal ou supérieur à 350 et présentant au moins 95 % de motifs alcool vinylique, d'épaisseur inférieure ou égale à 0,3 µm, la rugosité moyenne Rz du film de base étant inférieure ou égale à 0,30 µm sur la ou les faces du film comportant la couche d'alcool polyvinylique et cette ou ces dite(s) face(s) ne comportant en moyenne pas plus de 20 pics ayant une hauteur égale ou supérieure à 1 micromètre et pas plus de 150 pics ayant une hauteur comprise entre 0,4 et 1 micromètre, par millimètre carré, et ledit film composite présentant une perméabilité à l'oxygène mesurée à 23°C sous 50 % d'humidité relative, inférieure ou égale à 3 cm³/m²/24 h.

2. Film selon la revendication 1, caractérisé en ce que le polyester est choisi parmi les polytéréphtalates ou des polynaphtalène-dicarboxylates d'alkylènediol, de préférence parmi le polytéréphtalate d'éthylèneglycol ou de butanediol-1,4 et les copolyesters comportant au moins 80 % en moles de motifs téréphtalate d'éthylèneglycol.

3. Film selon l'une des revendications 1 ou 2, caractérisé en ce que la rugosité moyenne Rz du film de base est inférieure ou égale à 0,30 µm sur la face du film comportant la couche d'alcool polyvinylique et que cette dite face ne comporte en moyenne pas plus de 800 pics ayant une hauteur inférieure à 0,4 micromètre, par millimètre carré.

4. Film selon l'une des revendications 1 à 3, caractérisé en ce que la face du film de base comportant la couche d'alcool polyvinylique ne comporte en moyenne pas plus de 20 pics ayant une hauteur égale ou supérieure à 1 micromètre et pas plus de 100 pics ayant une hauteur comprise entre 0,4 et 1 micromètre, par millimètre carré.

5. Film selon l'une des revendications 1 à 4, caractérisé en ce que la face du film de base comportant la couche d'alcool polyvinylique ne comporte en moyenne pas plus de 500 pics ayant une hauteur inférieure à 0,4 micromètre, par millimètre carré.

6. Film selon l'une des revendications 1 à 5, caractérisé en ce que les 2 faces du film polyester de base ont des rugosités moyennes Rz différentes, égale ou supérieure à 0,15 micromètre sur la face dorsale du film et inférieure ou égale à 0,30 micromètre, et de préférence inférieure ou égale à 0,25 micromètre, sur la face du film de base comportant le revêtement en alcool polyvinylique, ladite la face du film de base ayant le revêtement en alcool polyvinylique ne comportant de préférence en moyenne pas plus de 20 pics ayant une hauteur égale ou supérieure à 1 micromètre et pas plus de 100 pics ayant une hauteur comprise entre 0,4 et 1 micromètre, par millimètre carré et encore plus préférentiellement pas plus de 500 pics ayant une hauteur inférieure à 0,4 micromètre, par millimètre carré.

7. Film selon l'une des revendications 1 à 6, caractérisé en ce que le film de base en polyester est constitué de deux couches présentant des propriétés de surface, notamment des rugosités, différentes.

8. Film selon la revendication 7, caractérisé en ce que le film de base en polyester dissymétrique est réalisé selon la technique de la coextrusion de 2 polyesters comportant des taux de charges différents et le cas échéant des charges différentes, préférentiellement le polyester utilisé étant le même pour les 2 couches coextrudées et la couche devant recevoir la couche d'alcool polyvinylique n'étant pas chargée.

9. Film selon l'une des revendications 7 ou 8, caractérisé en ce que la couche non chargée, ou plus faiblement chargée, recevant l'alcool polyvinylique a une épaisseur supérieure ou égale à 0,5 µm, de préférence supérieure ou égale à 1,0 µm.

10. Film selon l'une des revendications 1 à 9, caractérisé en ce que la couche d'alcool polyvinylique a une épaisseur égale ou inférieure à 0,20 µm.

11. Film selon l'une des revendications 1 à 10, caractérisé en ce qu'il comporte en outre sur l'une de ses faces une couche d'impression ou un primaire d'impression ou, sur la face libre de la couche d'alcool polyvinylique, une couche thermoscellable.

12. Procédé de préparation de film composite selon l'une des revendications 1 à 11, caractérisé en ce que l'on enduit le film de base en polyester, sur au moins une de ses faces présentant une rugosité moyenne Rz inférieure ou égale à 0,30 µm et ne comportant en moyenne pas plus de 20 pics ayant une hauteur égale ou supérieure à 1 µm et pas plus de 150 pics ayant une hauteur comprise entre 0,4 et 1 µm, par millimètre carré, à l'aide d'une solution aqueuse d'alcool polyvinylique présentant au moins 95 % de motifs alcool vinylique, ledit alcool polyvinylique présentant en solution aqueuse à 4 % et à 20°C une viscosité supérieure ou égale à 4 mPa.s, et en ce que l'on traite thermiquement ledit film enduit à une température égale ou supérieure à 170°C.

13. Procédé selon la revendication 12, caractérisé en ce que l'enduction par la solution aqueuse d'alcool polyvinylique est réalisée sur au moins une face d'un film en polyester ne comportant en moyenne pas plus de 800 pics ayant une hauteur inférieure à 0,4 µm, par millimètre carré.

14. Procédé selon l'une des revendications 12 ou 13, caractérisé en ce que l'enduction par la solution aqueuse d'alcool polyvinylique est réalisée sur au moins une face d'un film en polyester ne comportant en moyenne pas plus de 20 pics ayant une hauteur égale ou supérieure à 1 µm et pas plus de 100 pics ayant une hauteur comprise entre 0,4 et 1 µm, par millimètre carré.

15. Procédé selon l'une des revendications 12 à 14, caractérisé en ce que l'enduction par la solution aqueuse d'alcool polyvinylique est réalisée sur au moins une face d'un film en polyester ne comportant en moyenne pas plus de 500 pics ayant une hauteur inférieure à 0,4 µm, par millimètre carré.

16. Procédé selon l'une des revendications 12 à 15, caractérisé en ce que l'enduction du film de base en polyester par une solution aqueuse d'alcool polyvinylique est réalisée en ligne ou en reprise et de préférence en ligne et en ce que encore plus préférentiellement, l'enduction est réalisée en ligne sur un film de base en polyester étiré monoaxialement, qui sera étiré à nouveau après enduction au moins dans la direction opposée à celle du 1er étirage.

17. Procédé selon l'une des revendications 12 à 16, caractérisé en ce que la solution aqueuse d'alcool polyvinylique mise en oeuvre a une concentration de 1 % à 20 % en poids par poids et de préférence de 5 % à 15 % en poids par poids.

18. Procédé selon l'une des revendications 12 à 17, caractérisé en ce que l'alcool polyvinylique utilisé comporte au moins 97 % de motifs alcool vinylique et de préférence au moins 98 %.

19. Procédé selon l'une des revendications 12 à 18, caractérisé en ce que la température, à laquelle le film enduit est traité, se situe de préférence entre 180°C et 240°C et encore plus préférentiellement entre 200°C et 230°C.

20. Procédé selon l'une des revendications 12 à 19, caractérisé en ce que le film de base en polyester est préparé par coextrusion d'une part d'un polyester non chargé ou plus faiblement chargé et d'autre part d'un polyester chargé, et en ce qu'il comporte une couche chargée rugueuse sur la face dite dorsale et une couche non chargée, ou plus faiblement chargée, sur la face dite ventrale qui recevra l'enduction de la solution d'alcool polyvinylique.

21. Procédé selon la revendication 20, caractérisé en ce que la couche de polyester chargé présente une rugosité moyenne Rz supérieure ou égale à 0,15 µm et de préférence supérieure ou égale à 0,30 µm, tandis que la couche ventrale présente une rugosité totale inférieure ou égale à 0,30 µm et de préférence inférieure ou égale à 0,25 µm et en ce que de préférence la face du film de base, sur laquelle sera réalisée l'enduction à l'aide de la solution d'alcool polyvinylique, ne comporte en moyenne pas plus de 20 pics ayant une hauteur égale ou supérieure à 1 µm et pas plus de 100 pics ayant une hauteur comprise entre 0,4 et 1 µm, par millimètre carré et encore plus préférentiellement pas plus de 500 pics ayant une hauteur inférieure à 0,4 µm, par millimètre carré.

## Patentansprüche

1. Biaxial gereckte Verbundfolie auf Polyesterbasis mit verbesserten Barriereeigenschaften gegenüber Gasen, dadurch gekennzeichnet, dass sie eine Basisfolie aus Polyester mit einer Dicke von 5 µm bis 50 µm umfasst, die auf zumindest einer ihrer beiden Seiten mit einer 0,3 µm oder weniger dicken Schicht von Polyvinylalkohol überzogen ist, der einen zahlenmässigen mittleren Polymerisationsgrad von 350 oder mehr hat und mindestens 95 % Vinylalkoholeinheiten aufweist, wobei die mittlere Rauhigkeit Rz der Basisfolie auf der oder den Seiten der Folie, die die Polyvinylalkoholschicht tragen, 0,30 µm oder weniger beträgt und diese benannte(n) Seite(n) im Durchschnitt pro Quadratmillimeter nicht mehr als 20 Spitzen aufweisen, die eine Höhe von 1 Mikrometer oder mehr haben, und nicht mehr als 150 Spitzen, die eine Höhe zwischen 0,4 und 1 Mikrometer aufweisen, und dadurch, dass die benannte Verbundfolie eine bei 23 °C und 50 % relativer Luftfeuchte gemessene Sauerstoffdurchlässigkeit von 3 cm³/m²/24 h oder weniger aufweist.

2. Folie nach Anspruch 1, dadurch gekennzeichnet, dass der Polyester unter den Alkylendiol-Polyterephthalaten oder -Polynaphthalindicarboxylaten ausgewählt ist, vorzugsweise unter dem Ethylenglykol- oder Butan-1,4-diol-Polyterephthalat und den Copolyestern mit zumindest 80 Molprozent an Ethylenglykolterephthalateinheiten.

3. Folie nach einem der Ansprüche 1 oder 2, dadurch gekennzeichnet, dass die mittlere Rauhigkeit Rz der Basisfolie auf der Seite der Folie, die die Polyvinylalkoholschicht trägt, 0,30 µm oder weniger beträgt, und dass diese benannte Seite im Durchschnitt pro Quadratmillimeter nicht mehr als 800 Spitzen aufweist, die eine Höhe von weniger als 0,4 Mikrometern haben.

4. Folie nach einem der Ansprüche 1 bis 3, dadurch gekennzeichnet, dass die Seite der Basisfolie, die die Polyvinylalkoholschicht aufweist, im Durchschnitt pro Quadratmillimeter nicht mehr als 20 Spitzen aufweist, die eine Höhe von 1 Mikrometer oder mehr haben, und nicht mehr als 100 Spitzen, die eine Höhe zwischen 0,4 und 1 Mikrometer haben.

5. Folie nach einem der Ansprüche 1 bis 4, dadurch gekennzeichnet, dass die Seite der Basisfolie, die die Polyvinylalkoholschicht aufweist, im Durchschnitt pro Quadratmillimeter nicht mehr als 500 Spitzen aufweist, die eine Höhe von weniger als 0,4 Mikrometern haben.

6. Folie nach einem der Ansprüche 1 bis 5, dadurch gekennzeichnet, dass die beiden Seiten der Polyester-Basisfolie unterschiedliche durchschnittliche Rauhigkeiten Rz haben, und zwar 0,15 Mikrometer oder mehr auf der Rückseite der Folie und 0,30 Mikrometer oder weniger und vorzugsweise 0,25 Mikrometer oder weniger auf der Seite der Basisfolie, die die Beschichtung aus Polyvinylalkohol trägt, wobei die benannte Seite der Basisfolie, die die Polyvinylalkoholbeschichtung aufweist, im Durchschnitt pro Quadratmillimeter vorzugsweise nicht mehr als 20 Spitzen aufweist, die eine Höhe von 1 Mikrometer oder mehr haben, und nicht mehr als 100 Spitzen, die eine Höhe zwischen 0,4 und 1 Mikrometer haben, noch stärker bevorzugt nicht mehr als 500 Spitzen, die eine Höhe von weniger als 0,4 Mikrometern haben.

7. Folie nach einem der Ansprüche 1 bis 6, dadurch gekennzeichnet, dass die Polyester-Basisfolie aus zwei Schichten besteht, die unterschiedliche Oberflächeneigenschaften und namentlich Rauhigkeiten aufweisen.

8. Folie nach Anspruch 7, dadurch gekennzeichnet, dass die asymmetrische Polyester-Basisfolie mit dem Verfahren der Koextrusion von zwei Polyestern mit unterschiedlichen Füllstoffanteilen und gegebenenfalls unterschiedlichen Füllstoffen hergestellt wird, wobei bevorzugtermassen der verwendete Polyester für die beiden koextrudierten Schichten der gleiche ist und die Schicht, die die Polyvinylalkoholschicht empfangen soll, nicht gefüllt ist.

9. Folie nach einem der Ansprüche 7 oder 8, dadurch gekennzeichnet, dass die nicht oder schwächer gefüllte Schicht, die den Polyvinylalkohol empfängt, eine Dicke von 0,5 µm oder mehr und vorzugsweise 1,0 µm oder mehr hat.

10. Folie nach einem der Ansprüche 1 bis 9, dadurch gekennzeichnet, dass die Polyvinylalkoholschicht eine Dicke von 0,20 µm oder weniger hat.

11. Folie nach einem der Ansprüche 1 bis 10, dadurch gekennzeichnet, dass sie zusätzlich auf einer ihrer Seiten eine Bedruckungsschicht oder einen Bedruckungsprimer oder auf der von der Polyvinylalkoholschicht freien Seite eine heisssiegelbare Schicht aufweist.

12. Verfahren zur Herstellung von Verbundfolie nach einem der Ansprüche 1 bis 11, dadurch gekennzeichnet, dass man die Basisfolie aus Polyester auf zumindest einer ihrer Seiten, die eine mittlere Rauhigkeit Rz von 0,30 µm oder weniger aufweist und im Durchschnitt pro Quadratmillimeter nicht mehr als 20 Spitzen mit einer Höhe von 1 µm oder mehr und nicht mehr als 150 Spitzen mit einer Höhe zwischen 0,4 und 1 µm umfasst, mit Hilfe einer wässrigen Lösung von Polyvinylalkohol bestreicht, der mindestens 95 % Vinylalkoholeinheiten aufweist, wobei der benannte Polyvinylalkohol in wässriger Lösung von 4 % bei 20 °C eine Viskosität von 4 mPa.s oder mehr aufweist, und dadurch, dass man die benannte, bestrichene Folie bei einer Temperatur von 170 °C oder mehr thermisch behandelt.

13. Verfahren nach Anspruch 12, dadurch gekennzeichnet, dass das Bestreichen mit der wässrigen Polyvinylalkohollösung auf zumindest einer Seite einer Polyesterfolie erfolgt, die im Durchschnitt pro Quadratmillimeter nicht mehr als 800 Spitzen mit einer Höhe von weniger als 0,4 µm umfasst.

14. Verfahren nach einem der Ansprüche 12 oder 13, dadurch gekennzeichnet, dasss das Bestreichen mit der wässrigen Polyvinylalkohollösung auf zumindest einer Seite einer Polyesterfolie erfolgt, die im Durchschnitt pro Quadratmillimeter nicht mehr als 20 Spitzen mit einer Höhe von 1 µm oder mehr und nicht mehr als 100 Spitzen mit einer Höhe zwischen 0,4 und 1 µm umfasst.

15. Verfahren nach einem der Ansprüche 12 bis 14, dadurch gekennzeichnet, dass das Bestreichen mit der wässrigen Polyvinylalkohollösung auf zumindest einer Seite einer Polyesterfolie erfolgt, die im Durchschnitt pro Quadratmillimeter nicht mehr als 500 Spitzen mit einer Höhe von weniger als 0,4 µm umfasst.

16. Verfahren nach einem der Ansprüche 12 bis 15, dadurch gekennzeichnet, dass das Bestreichen der Basisfolie aus Polyester mit einer wässrigen Polyvinylalkohollösung kontinuierlich oder diskontinuierlich und vorzugsweise kontinuierlich erfolgt und dass das Bestreichen noch stärker bevorzugt kontinuierlich an einer monoaxial gereckten Basisfolie aus Polyester erfolgt, die nach dem Bestreichen von neuem zumindest in der Richtung gereckt wird, die der des ersten Reckens entgegengesetzt ist.

17. Verfahren nach einem der Ansprüche 12 bis 16, dadurch gekennzeichnet, dass die eingesetzte wässrige Polyvinylalkohollösung eine Konzentration von 1 bis 20 Gewichtsprozent und vorzugsweise von 5 bis 15 Gewichtsprozent hat.

18. Verfahren nach einem der Ansprüche 12 bis 17, dadurch gekennzeichnet, dass der eingesetzte Polyvinylalkohol zumindest 97 % Vinylalkoholeinheiten und vorzugsweise zumindest 98 % umfasst.

19. Verfahren nach einem der Ansprüche 12 bis 18, dadurch gekennzeichnet, dass die Temperatur, bei der die bestrichene Folie behandelt wird, vorzugsweise zwischen 180 °C und 240 °C und noch stärker bevorzugt zwischen 200 °C und 230 °C liegt.

20. Verfahren nach einem der Ansprüche 12 bis 19, dadurch gekennzeichnet, dass die Basisfolie aus Polyester durch Koextrusion einerseits eines nicht oder schwächer gefüllten Polyesters und andererseits eines gefüllten Polyesters hergestellt wird, und dadurch, dass sie eine rauhe, gefüllte Schicht auf der als Rückseite benannten Schicht und eine nicht oder schwächer gefüllte Schicht auf der als Vorderseite benannten Schicht, die den Strich mit der Polyvinylalkohollösung empfangen soll, umfasst.

21. Verfahren nach Anspruch 20, dadurch gekennzeichnet, dass die Schicht aus gefülltem Polyester eine mittlere Rauhigkeit Rz von 0,15 µm oder mehr und vorzugsweise von 0,30 µm oder mehr aufweist, während die vorderseitige Schicht eine Gesamtrauhigkeit von 0,30 µm oder weniger und vorzugsweise von 0,25 µm oder weniger aufweist, und dadurch, dass vorzugsweise die Seite der Basisfolie, auf der das Bestreichen mit Polyvinylalkohollösung erfolgen soll, im Durchschnitt pro Quadratmillimeter nicht mehr als 20 Spitzen mit einer Höhe von 1 µm oder mehr und nicht mehr als 100 Spitzen mit einer Höhe zwischen 0,4 und 1 µm, noch stärker bevorzugt nicht mehr als 500 Spitzen mit einer Höhe von weniger als 0,4 µm umfasst.

## Claims

1. A polyester-based, biaxially drawn composite film having improved gas-barrier properties, characterised in that it comprises a polyester base film which has a thickness of from 5 µm to 50 µm, coated on at least one of its two faces with a layer of polyvinyl alcohol which has a number-average degree of polymerisation equal to or greater than 350 and which comprises at least 95 % of vinyl alcohol units, of thickness lower than or equal to 0.3 µm, the mean roughness Rz of the base film being lower than or equal to 0.30 µm on the face(s) of the film comprising the polyvinyl alcohol layer and that or these said face(s) comprising on average not more than 20 peaks of a height equal to or higher than 1 micrometer and not more than 150 peaks of a height ranging from 0.4 to 1 micrometer, per square millimetre, and the said composite film exhibiting a permeability to oxygen, measured at 23°C at 50 % relative humidity, lower than or equal to 3 cm³/m²/24 h.

2. The film according to claim 1, characterised in that the polyester is chosen from alkylenediol polyterephthalates or polynapthalenedicarboxylates, preferably from ethylene glycol or 1,4-butanediol polyterephthalate and copolyesters containing at least 80 mol % of ethylene glycol terephthalate units.

3. The film according to one of claims 1 or 2, characterised in that the mean roughness Rz of the base film is lower than or equal to 0.3 µm on the film face comprising the polyvinyl alcohol layer and in that this said face does not on average comprise more than 800 peaks of a height lower than 0.4 micrometer, per square millimeter.

4. The film according to anyone of claims 1 to 3, characterised in that the face of the base film comprising the polyvinyl alcohol layer does not on average comprise more than 20 peaks of a height equal to or higher than 1 micrometer and not more than 100 peaks of a height ranging from 0.4 to 1 micrometer, per square millimetre.

5. The film according to anyone of claims 1 to 4, characterised in that the face of the base film comprising the polyvinyl alcohol layer does not on average comprise more than 500 peaks of a height lower than 0.4 micrometer, per square millimetre.

6. The film according to anyone of claims 1 to 5, characterised in that the two faces of the base polyester film have different mean roughnesses Rz, equal to or greater than 0.15 micrometer on the back face of the film and lower than or equal to 0.30 micrometer, and preferably lower than or equal to 0.25 micrometer, on the base film face comprising the polyvinyl alcohol coating, the said face of the base film having the polyvinyl alcohol coating preferably not comprising on average more than 20 peaks of a height equal to or higher than 1 micrometer and not more than 100 peaks of a height between 0.4 and 1 micrometer, per square millimetre and, still more preferably, not more than 500 peaks of a height lower than 0.4 micrometer, per square millimetre.

7. The film according to anyone of claims 1 to 6, characterised in that the polyester base film consists of two layers exhibiting different surface properties, especially roughnesses.

8. The film according to claim 7, characterised in that the unsymmetrical polyester base film is produced according to the technique of the coextrusion of 2 polyesters comprising different filler contents and, if appropriate, different fillers, preferably the polyester employed being the same for the two coextruded layers and the layer which is to receive the polyvinyl alcohol layer not being filled.

9. The film according to one of claims 7 or 8, characterised in that the unfilled, or more slightly filled, layer receiving the polyvinyl alcohol has a thickness higher than or equal to 0.5 µm, preferably higher than or equal to 1.0 µm.

10. The film according to anyone of claims 1 to 9, characterised in that the polyvinyl alcohol layer has a thickness equal to or lower than 0.20 µm.

11. The film according to anyone of claims 1 to 10, characterised in that it additionally comprises on one of its faces a printing or printing primer layer or, on the face free from the polyvinyl alcohol layer, a heat-sealable layer.

12. A process for the preparation of composite film according to anyone of claims 1 to 11, characterised in that the polyester base film is coated on at least one of its faces exhibiting a mean roughness Rz lower than or equal to 0.30 µm and comprising on average not more than 20 peaks of a height equal to or greater than 1 µm and not more than 150 peaks of a height between 0.4 and 1 µm, per square millimetre, with the aid of an aqueous solution of polyvinyl alcohol containing at least 95 % of vinyl alcohol units, the said polyvinyl alcohol exhibiting in aqueous solution at a concentration of 4 % and at 20°C a viscosity higher than or equal to 4 mPa.s, and in that the said coated film is heat-treated at a temperature equal to or higher than 170°C.

13. The process according to claim 12, characterised in that the coating with the aqueous solution of polyvinyl alcohol is carried out on at least one face of a polyester film comprising on average not more than 800 peaks of a height lower than 0.4 µm, per square millimetre.

14. The process according to one of claims 12 or 13, characterised in that the coating with the aqueous solution of polyvinyl alcohol is carried out on at least one face of a polyester film comprising on average not more than 20 peaks of a height equal to or greater than 1 µm, and not more than 100 peaks of a height between 0.4 and 1 µm, per square millimetre.

15. The process according to anyone of claims 12 to 14, characterised in that the coating with the aqueous solution of polyvinyl alcohol is carried out on at least one face of a polyester film comprising on average not more than 500 peaks of a height lower than 0.4 µm, per square millimetre.

16. The process according to anyone of claims 12 to 15, characterised in that the coating of the polyester base film with an aqueous solution of polyvinyl alcohol is carried out in line or by reprocessing and preferably in line and in that, still more preferably, the coating is carried out in line on a monoaxially drawn polyester base film which will be drawn on again after coating at least in the direction opposite to that of the first drawing.

17. The process according to anyone of claims 12 to 16, characterised in that the aqueous solution of polyvinyl alcohol which is used has a concentration of 1 % to 20 % by weight per weight and preferably of 5 % to 15 % by weight per weight.

18. The process according to anyone of claims 12 to 17, characterised in that the polyvinyl alcohol employed contains at least 97 % of vinyl alcohol units and preferably at least 98 %.

19. The process according to anyone of claims 12 to 18, characterised in that the temperature at which the coated film is treated lies preferably between 180°C and 240°C and still more preferably between 200°C and 230°C.

20. The process according to anyone of claims 12 to 19, characterised in that the polyester base film is prepared by coextrusion, on the one hand, of an unfilled or more slightly filled polyester and, on the other hand, of a filled polyester, and in that it comprises a filled layer which is rough on the so-called back face and an unfilled or more slightly filled layer on the so-called front face which will receive the coating of the polyvinyl alcohol solution.

21. The process according to claim 20, characterised in that the filled polyester layer has a mean roughness Rz higher than or equal to 0.15 µm and preferably higher than or equal to 0.30 µm, whereas the front layer has a total roughness lower than or equal to 0.30 µm and preferably lower than or equal to 0.25 µm and in that the face of the base film on which the coating with the aid of the polyvinyl alcohol solution will be carried out preferably comprises on average not more than 20 peaks of a height equal to or greater than 1 µm and not more than 100 peaks of a height of between 0.4 and 1 µm, per square millimetre, and still more preferably not more than 500 peaks of a height lower than 0.4 µm, per square millimetre.
